# EUROPEAN PATENT APPLICATION

(11) **EP 2 345 485 A2**
(43) Date of publication of application: **20.07.2011**
(21) Application number: 11150771.1
(22) Date of filing: 12.01.2011
(51) Int. Cl.: B08B 15/00, F24F 7/00

(54) **System and method for smoke suppression**

(30) Priority: 13.01.2010 GB 1000479
(71) Applicant: Fire Engineering Associates Limited, Sheffield S11 8NP (GB); Interactive Special Projects Limited, Trafford Park Manchester Greater Manchester M17 1DZ (GB)
(72) Inventor: Fenlon, David, Manchester, M29 7GN (GB)
(74) Representative: Wightman, David Alexander

(57) **Abstract**

A smoke suppression system for a building (1) employs at least one pressurisation device (19) operable when a fire (31) is detected to restrict the spread of smoke in an enclosed space by raising the air pressure in at least part of the enclosed space. The enclosed space is provided with exhaust ports (14) to remove smoke by raising the air pressure to create a pressure gradient to cause smoke to move towards the exhaust ports (14). The pressurisation device (19) has a primary power supply and a secondary power supply, the secondary power supply being an uninterrupted power supply for operating the system when the primary power supply is offline.

## Description

This invention relates to a smoke suppression system and components for use in a smoke suppression system. More particularly the invention relates to the provision of back-up power systems in smoke suppression systems. The invention has particular but not exclusive use in buildings with multiple floors.

In the event of a fire in an enclosed space (such as a building, ship or train), hot toxic smoke can quickly spread and fill escape routes. This may be a catastrophic hindrance to people attempting to escape the enclosed space and indeed it is often smoke that kills rather than flames.

Keeping smoke from a fire away from those areas that may be important for escape such as stairwells, lobbies, corridors and other communal areas is therefore desirable. Systems to combat the spread of smoke often rely on the mains power supply and operation may be compromised by the mains power supply going offline, for example due to fire damage. The use of generators as a back-up for the mains power supply may limit the use of such systems in existing buildings due to problems of location and installation.

The present invention addresses this and other problems with current systems.

According to a first aspect of the invention a smoke suppression system is arranged to restrict the spread of smoke in an enclosed space by raising the air pressure in at least part of the enclosed space, the smoke suppression system comprising at least one pressurisation device, the pressurisation device having a primary power supply and a secondary power supply, the secondary power supply being an uninterrupted power supply.

The provision of a secondary power supply in addition to the primary power supply may be advantageous as it may provide a degree of redundancy in the system in the event that the primary power supply is offline (through failure or de-activation). Thus the secondary power supply may allow the smoke suppression system to operate when the primary power supply is offline. The primary power supply going offline may for example be caused by a power cut, or when damage has occurred to a power distribution network. Such events may be more likely in the event of a fire occurring in or in proximity to the enclosed space.

The use of an uninterrupted power supply may be advantageous as it may be capable of almost instantaneously supplying power in the event that the primary power supply unexpectedly goes offline and the smoke suppression system is required to operate. Additionally it may be impervious to some of the failure conditions of the primary power supply, for example a mains power cut. In some embodiments the uninterrupted power supply may also be capable of correcting or compensating for other problems such as voltage surges and brownouts in the primary power supply.

Preferably the pressurisation device is arranged to increase the pressure in at least one area of the enclosed space, preferably an area forming part of an escape route from the enclosed space, for example a communal area. Communal areas often form an essential part of possible escape routes from an enclosed space. Indeed often some communal areas are provided specifically for escape in the event of an emergency. Communal areas may include stairs, landings, lobbies and corridors for example.

Keeping communal areas free from smoke may therefore be advantageous in helping with evacuation and additionally in fire fighting efforts.

Preferably the pressurisation device is additionally arranged to increase the pressure in one or more areas neighbouring the communal areas. These neighbouring areas may be additional communal areas and or non-communal areas such as residential areas. Increases in pressure of neighbouring areas may be achieved by air under pressure bleeding into said neighbouring areas. This may create a pressure gradient through all or a substantial part of the enclosed space, and may therefore serve to restrict smoke to areas of the enclosed space furthest from the pressurisation device(s).

Preferably the secondary power supply is connected for supplying power to the pressurisation device when the primary power supply is offline. In this way, if a fire is detected and the smoke suppression system is required to operate, power can be drawn from the secondary power supply.

In some embodiments one or more sensors are provided to indicate if the primary power supply is offline and to act as a trigger for connection of the secondary power supply. Alternatively, the electrical system connecting the pressurisation device and primary and secondary power supplies may be arranged such that a consequence of the primary power supply going offline is that the secondary power supply is connected.

Preferably the pressurisation device employs a three phase power supply. A three phase power supply is desirable for the pressurisation device to be temperature rated for use in conditions such as a fire where elevated temperatures are likely to be encountered.

Preferably the pressurisation device comprises at least one fan used to force air into at least part of the enclosed space. Preferably a motor for the fan is rated for operation at 200°C for two hours and/or rated for operation at 300°C for one hour. Preferably the motor is reversible. This may be advantageous for smoke clearance, especially when an emergency is over and/or fire service personnel deem it appropriate.

Preferably the uninterrupted power supply is a single phase power supply such as one or more storage batteries and an inverter or other suitable means is preferably used to convert single phase power from the uninterrupted power supply to three phase power for use by the pressurisation device. Preferably, the single phase power supply is maintained in an operable condition by the primary supply source such that the smoke suppression system is operable if the primary power supply is offline and the system switches from the primary power supply to the secondary power supply. In this way, the smoke suppression system can operate if the primary power source fails.

Preferably the smoke suppression system further comprises one or more smoke detectors. Smoke detectors may be used to automatically trigger activation of the pressurisation device and/or activate an alarm. Alternatively or additionally however other fire detectors may be used (e.g. heat detectors).

Preferably the smoke suppression system further comprises one or more pressure sensors. Pressure sensors may be used to monitor the effect the pressurisation device is having. The pressure sensor(s) may also be used in a feedback loop with the pressurisation device so as its rate of operation can be altered depending on the effect it is having. The rate of fan rotation may be continuously variable or else may be variable through staged discrete rates.

Preferably the smoke suppression system further comprises a control system. The control system may be used for controlling one or more of activation, deactivation, rate of operation and/or reversal of the pressurisation device. The control system may further be used to disconnect the primary power supply and connect the secondary power supply in the event that the primary power supply goes offline and/or reverse this process when the system is reset.

The control system may be arranged to respond to inputs from one or more smoke detectors and/or one or more pressure sensors and/or one or more trigger conditions indicating that the primary power supply is offline.

The control system may additionally or alternatively be arranged to respond to manual control. This may allow for changes to be made in the fan's operation by the attending fire officer or for test purposes.

Preferably the control system comprises a programmable medium. The control system may perform some or all of its functions automatically or may require a manual command for some or all of its functions.

Preferably the smoke suppression system further comprises at least one control panel. Preferably manual control is available for at least some of the smoke suppression system functions from the control panel. The control panel may additionally or alternatively provide information about the status and/or performance of the smoke suppression system.

It may be that the pressurisation device and/or the smoke detectors and/or the pressure sensors and/or the control system and/or the control panel and/or any further components of the smoke suppression system are linked by wired and/or wireless means.

It may be that both the primary and secondary power supplies to the pressurisation device also supply power to one or more of the smoke detectors, pressure sensors, control system and control panel. In particular the secondary power supply may supply power to all systems of the smoke suppression system in the event that the primary power supply is offline. In this way the entire smoke suppression system may remain operable in the event of failure of the primary power supply.

Preferably the pressurisation device is located so as to introduce air from the top or bottom of the area to be protected, for example an area forming part of an escape route such as a communal area.

It may be that air escape vents are provided in areas of the enclosed space distant from the pressurisation device. This may allow smoke and air to exit the enclosed space, particularly in view of a pressure gradient created by the pressurisation device. Said air escape vents may be arranged to limit the quantity of escaping air so as not to compromise the air pressure increase created by the pressurisation device.

Preferably the pressurisation device is arranged to create a pressure of at least 50Pa in at least one communal area. This pressure compares favourably with the 8Pa pressure created by a fully developed fire within a typical residential setting. Preferably, the pressurisation device is arranged to create a pressure up to 60Pa.

In some embodiments the smoke suppression system may be arranged to be retrofitted into an existing enclosed space.

According to a second aspect of the invention a pressurisation device is provided for use in the smoke suppression system of the first aspect of the invention.

According to a third aspect of the invention a smoke suppression system is arranged to restrict the spread of smoke in an enclosed space by raising the air pressure in at least part of the enclosed space up to about 60Pa.

Preferably the air pressure is raised to at least 30Pa, more preferably at least 40Pa and most preferably at least 50Pa.

According to a fourth aspect of the invention a method of restricting the spread of smoke in an enclosed space is provided, comprising providing a pressurisation device arranged to raise the air pressure in at least part of the enclosed space up to about 60Pa.

Preferably the air pressure is raised to at least 30Pa, more preferably at least 40Pa and most preferably at least 50Pa.

According to a fifth aspect of the invention a smoke suppression system comprising at least one pressurisation device is provided within part of an enclosed space and is arranged to restrict the spread of smoke to the part of the enclosed space by increasing the air pressure therein, and is further arranged to increase the pressure in one or more areas neighbouring the part of the enclosed space.

According to a sixth aspect of the invention a smoke suppression system is provided for an enclosed space, the system having a pressurisation device wherein a power source for the pressurisation device includes a primary power supply and a secondary, back-up power supply wherein the secondary, back-up power supply is maintained in an operable state by the primary power supply so as to takeover from the primary power supply in the event the primary power supply fails.

The secondary, back-up power supply may be an uninterrupted power supply, that is a power supply having an in-built power source that does not rely on connection to the mains power supply. For example, the uninterrupted power supply may comprise one or more storage batteries maintained in a charged state by the primary power supply. In this way, the secondary, back-up power supply is ready and can takeover from the primary power supply to operate the pressurisation device in an emergency in a reliable manner.

The uninterrupted power supply may be a single phase power supply and means such as an inverter may be provided for converting the output from the uninterrupted power supply to a three phase power supply suitable for operating the pressurisation device at the elevated temperatures typically encountered during a fire. The pressurisation device may include a fan driven by a motor connected to the power source. More than one fan may be provided. Each fan may have its own motor. The power source may switch automatically from the primary power supply to the secondary, back-up power supply if the primary power supply fails.

An embodiment of the invention will now be described, by way of example only, with reference to the accompanying Figures, in which:
Figure 1 shows a cross sectional view through a building in a first state in which an embodiment of the invention has been installed;
Figure 2 shows a cross sectional view through the building of

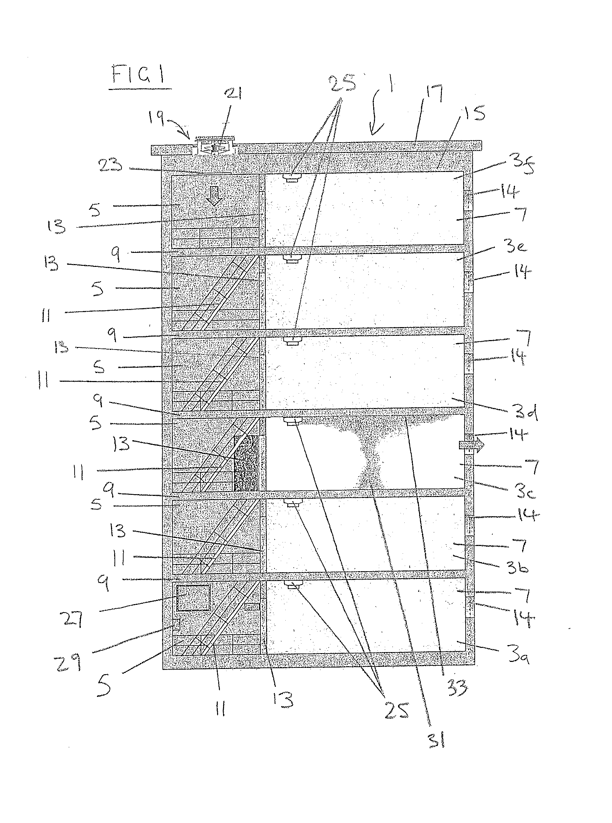

Figure 1 shown in a second state.

Referring first to Figure 1 a building is generally shown at 1. The building 1 has six floors; a ground floor 3a, a first floor 3b, a second floor 3c, a third floor 3d, a fourth floor 3e and a fifth floor 3f. Each floor 3a, 3b, 3c, 3d, 3e, 3f of the building 1 is accessible via an access area 5 (which is considered to be communal) provided with a stairway. Each floor 3a, 3b, 3c, 3d, 3e, 3f of the building 1 has a corridor area 7 (also considered to be communal) accessible from the access area 5. Additionally non-communal residential areas (not shown) are provided and are accessible from corridor areas 7. Each pair of adjacent floors is separated by a floor divide 9. Each of the floors 3a, 3b, 3c, 3d, 3e, has a flight of stairs 11 within its respective access area 5. The stairs 11 allow access to different floors of the building 1 through suitably arranged apertures (not shown) in the floor divides 9. The corridor area 7 on each floor 3a, 3b, 3c, 3d, 3e, 3f is accessible via a door 13 from the access area 5 on that floor 3a, 3b, 3c, 3d, 3e, 3f. Each corridor area 7 is preferably provided with an exhaust port 14 which provides a passage connecting the exterior of the building 1 and the respective corridor area 7. The fifth floor 3f has a ceiling 15, above which is a roof assembly 17.

Passing through the ceiling 15 and roof assembly 17 is a pressurisation device 19. The pressurisation device 19 provides a passage connecting the exterior of the building 1 and the access area 5 of the fifth floor 3f. Deployed within the pressurisation device 19 is a fan 21 preferably arranged to draw air from the exterior of the building 1 through the roof assembly 17, ceiling 15 and a vent 23, into access area 5 of the fifth floor 3f. Preferably provided in each corridor area 7 is a smoke detector 25. In the access area 5 of the ground floor 3a is a control system 27 and a control panel 29. The pressurisation device 19, smoke detectors 25, control system 27 and control panel 29 are operatively connected via suitable wires and cables (not shown) and together form a smoke suppression system. Alternatively or additionally a wireless link may be employed for some or all of the system.

Operation of the smoke suppression system inside building 1 will now be discussed. As will be apparent, once the building 1 has been entered, the access areas 5 (which are communal) are accessible via stairs 11. The corridor areas 7 (which are communal) are accessible via doors 13. Each non-communal residential area is however accessible only to someone with means for passing through the door (not shown) to that area (the doors in question can be selectively locked). In the event of an emergency, escape from each respective non-communal residential area is possible via the respective corridor area 7, door 13 and then the access areas 5 and stairs 11 (as necessary) until the ground floor 3f is reached, whereupon the building may be exited.

As shown, smoke from a fire 31 in a non communal room opening onto the corridor area 7 of the second floor 3 has spread to the smoke detector 25 in the corridor area 7 of the second floor 3c. When the smoke is detected, the smoke detector 25, located in corridor area 7, sends a signal to the control system 27, which automatically sends an activation signal to the pressurisation device 19. Consequently the fan 21 of the pressurisation device 19 rotates, drawing air from the exterior of the building 1 into the access area 5 of the fifth floor 3f. The additional air forced into the access area 5 of the fifth floor 3f builds up the air pressure and also pressurises the remaining access areas 5 on the other floors 3a, 3b, 3c, 3d, 3e via the apertures (not shown) in the floor divides 9. In this way, all access areas 5 become pressurised.

Any leakage of pressurised air into the corridor areas 7 tends to create a pressure gradient from the access areas 5 towards the exhaust ports 14. Such leakage occurs because doors 13 do not create an air tight seal in their apertures. Further leaking occurs when one or more of the doors 13 are open (see the door 13 on the second floor 3c).

The pressurisation of the access areas 5 and any pressure gradient created from the access areas 5 towards the exhaust ports 14, tends to keep the access areas 5 substantially clear of smoke. Additionally the pressure gradient may serve to restrict the spread of smoke in corridor area 7 or even maintain it substantially clear of smoke. This may be especially true where the fire is present in one of the non-communal residential areas rather than in one of the corridor areas 7.

Keeping the access areas 5 and secondarily the corridor areas 7 substantially clear of smoke may be particularly helpful in giving occupants of the non-communal residential areas an opportunity to escape the burning building 1. Additionally access areas 5 and/or corridor areas 7 that are substantially clear of smoke may be particularly helpful to fire fighters attempting to put out the fire and/or rescue anyone still in the building 1.

Although the pressurisation device 19 is activated automatically when a smoke detector 25 detects smoke, manual control over the pressurisation device 19 is preferably also provided for by control panel 29. The control panel allows for activation and de-activation of the pressurisation device 19. It also allows for the direction of the fan 21 to be reversed, such that the fan may directly expel smoke from the building 1 once evacuation is complete and/or when fire service personnel deem it to be appropriate.

Referring to Figure 1 it can be seen that in a first state of the building 1 the door 13 on the second floor 3c is opened. This creates an air pressure gradient from the access areas 5 to the exhaust port 14 on the second floor 3c. In such a state the effect of the fan is sufficient to create an air movement speed of 0.75 m/s or maintain a pressure of at least 10Pa in corridor area 7.

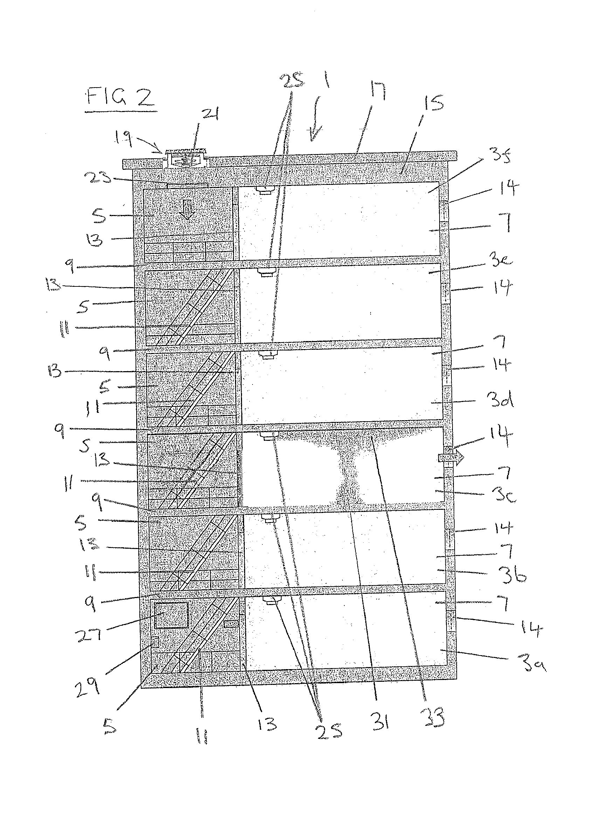

Referring now to Figure 2 the building 1 is shown in a different state where the door 13 on the second floor 3c is closed. This tends to cause a greater pressure build-up in the access areas 5 than the state shown in Figure 1. In the state of Figure 2, the effect of the fan 21 is sufficient to create a pressure in the access areas 5 of up to 60Pa and preferably at least 50Pa.

When the pressurisation device 19 is activated by the control system 27 or manually via control panel 29, it draws power to turn the fan 21 from a primary power supply (in this case the mains). If however the primary power supply is offline (through failure or deactivation) a secondary power supply (an uninterrupted power supply) is connected and supplies the necessary power when the pressurisation device 19 is activated. Primary power supply failure may be considerably more likely where the building 1 is on fire. It is therefore highly advantageous to have power redundancy provided by the secondary power supply. It is still more advantageous that this secondary power supply is an uninterrupted power supply as this can almost instantaneously supply power in the event that the primary power supply unexpectedly goes offline and the pressurisation device 19 is required to operate.

The fan 21 requires three phase current in order to operate (this allows the fan 21 to be temperature rated). The secondary power supply provides single phase current. In order that the secondary power supply can be used to power the fan 21, it is provided with an inverter.

The building 1 shown in Figure 1 is an approximate representation of a multi-floor residential building. It will be appreciated however that the smoke suppression system is suitable for use in buildings or other enclosed spaces of various designs, dimensions and layouts. It may be for example that the building has additional communal areas, such as lobbies or corridors, and is designed so that air may leak from the access area in which the pressurisation device is deployed to these additional communal areas. This may help to prevent smoke spreading into these additional communal areas in addition to helping to prevent smoke spreading into the access area.

It will be understood that the invention is not limited to the embodiment above-described and various modifications and improvements can be made without departing from the various concepts described herein. In some embodiments for example the fan of the pressurisation device may be capable of multiple operating speeds. Where this is the case pressure sensors may be deployed in the access areas and provide feedback information to the pressurisation device on the pressure gradient being created. The fan speed may then be adjusted accordingly. It will further be appreciated that the areas in which smoke is maintained need not be residential areas. The principal is simply that areas of the building that are crucial or important for people escaping in a fire may be kept relatively clear of smoke. Any of the features may be employed separately or in combination with any other features and the invention extends to and includes all combinations and sub-combinations of one or more features described herein in any form of system for suppressing the spread of smoke.

## Claims

1. A smoke suppression system comprising at least one pressurisation device, the pressurisation device having a primary power supply and a secondary power supply, the secondary power supply being an uninterrupted power supply configured so that the smoke suppression system can operate if the primary power supply is offline, the system being arranged to restrict the spread of smoke in an enclosed space by raising the air pressure in at least part of the enclosed space.

2. A smoke suppression system according to claim 1 wherein the pressurisation device is arranged to increase the air pressure in at least one area of the enclosed space, preferably an area forming part of an escape route from the enclosed space such as a communal area that may include stairs, landings, lobbies and corridors.

3. A smoke suppression system according to claim 2 wherein the pressurisation device is additionally arranged to increase the air pressure in one or more areas neighbouring said at least one area, for example by air under pressure bleeding into the one or more neighbouring areas creating a pressure gradient through all or a substantial part of the enclosed space, and wherein said one or more neighbouring areas preferably include additional communal areas and/or non-communal areas such as residential areas.

4. A smoke suppression system according to any preceding claim wherein one or more sensors are provided to indicate if the primary power supply is offline and to act as a trigger for connection of the secondary power supply.

5. A smoke suppression system according to any preceding claim wherein the pressurisation device employs a three phase power supply and is temperature rated for use in conditions where elevated temperatures are encountered.

6. A smoke suppression system according to any preceding claim wherein the pressurisation device comprises at least one fan used to force air into at least part of the enclosed space wherein a motor for the fan may be adjustable to vary fan speed and/or may be reversible and/or may be optionally rated for operation at 200_{°}C for two hours and/or for operation at 300°C for one hour.

7. A smoke suppression system according to any preceding claim wherein the uninterrupted power supply is a single phase power supply such as one or more storage batteries and an inverter is used to convert single phase power from the uninterrupted power supply to three phase power for use by the pressurisation device and wherein the single phase power supply is preferably maintained in an operable condition by the primary supply source such that the smoke suppression system is operable if the primary power supply is offline and the system switches from the primary power supply to the secondary power supply.

8. A smoke suppression system according to any preceding claims wherein the smoke suppression system further comprises one or more detectors such as smoke or heat detectors used to automatically trigger activation of the pressurisation device and/or activate an alarm.

9. A smoke suppression system according to any preceding claim wherein the smoke suppression system further comprises one or more pressure sensors for monitoring the effect of the pressurisation device, wherein the one or more pressure sensors is optionally used in a feedback loop with the pressurisation device for altering the operation of the pressurisation device in response to the effect it is having.

10. A smoke suppression system according to any preceding claim further comprising a control system for controlling one or more of activation, deactivation, rate of operation and/or reversal of the pressurisation device, wherein the control system is preferably used to disconnect the primary power supply and connect the secondary power supply in the event that the primary power supply goes offline and/or reverse this process when the system is reset.

11. A smoke suppression system according to claim 10 wherein the control system is arranged to respond to inputs from one or more smoke or heat detectors and/or one or more pressure sensors and/or one or more trigger conditions indicating that the primary power supply is offline.

12. A smoke suppression system according to claim 10 or claim 11 wherein the control system is arranged to respond to manual control and preferably comprises at least one control panel for control of at least some of the smoke suppression system functions and/or for providing information about the status and/or performance of the smoke suppression system.

13. A smoke suppression system according to any preceding claim wherein the primary power supply to the pressurisation device also supplies power to one or more other components of the smoke suppression system and the secondary power supply preferably supplies power to said one or more other components of the smoke suppression system in the event that the primary power supply is offline.

14. A smoke suppression system according to any preceding claim wherein air escape vents are provided in areas of the enclosed space distant from the pressurisation device and the air escape vents are preferably arranged to limit the quantity of escaping air so as not to compromise the air pressure increase created by the pressurisation device.

15. A method of restricting the spread of smoke in an enclosed space comprising the steps of providing a pressurisation device arranged to raise the air pressure in at least part of the enclosed space to at least 30Pa, preferably at least 40Pa, more preferably at least 50Pa and most preferably up to about 60Pa.
